# EUROPEAN PATENT APPLICATION

(11) **EP 1 462 300 A1**
(43) Date of publication of application: **29.09.2004**
(21) Application number: 03007149.2
(22) Date of filing: 28.03.2003
(51) Int. Cl.: B60L 15/20, B60L 11/18, H02J 1/14, H02J 7/00

(54) **Energy management system for electric vehicle**

(71) Applicant: Welltek Energy Co., Ltd., Danshuei Jen, Taipei (TW)
(72) Inventor: Ma, Bin-Yen, Beitou Chiu, Taipei (TW); Chen, Ching-Kuo, Datung Chiu, Taipei (TW); Chiang, Hung-Hsiang, Shindian City, Taipei (TW); Li, Kou-Ming, Jungjeng E. Road, Danshuei Jen, Taipei (TW); Chiang, Pei-Chang, Danshuei Jen, Taipei (TW); Chen, Cheng-Hsin, Beitou Chiu, Taipei (TW)
(74) Representative: Viering, Jentschura & Partner

(57) **Abstract**

An energy management system for electronic vehicle is using a central control system with a standard transmission interface to communicate and exchange information with every module unit, a battery set, a motor driving system, a battery charger and a display device. Said central control system is the central control system of the whole electronic vehicle for collecting and monitoring the using status of said battery set. According to the rider's or driver's demand, it may determine the output power and drive the motor for providing sufficient power. Besides, the central control system may control the whole electronic vehicle information, so the operation status of the vehicle, such as battery balance volume, run-mileage, balance mileage, and/or maintenance information, may display on said display device for the rider or driver to control the vehicle.

## Description

### BACKGROUND OF THE INVENTION

### 1. Field of the invention

The present invention is related to an energy management system for electronic vehicle, particularly to a system having a central control system with standard transmission interface to communicate with every module unit, a battery set, a motor driving system, a battery charger and a display device, to achieve the best performance for rider or driver to have sufficient information regarding to the energy management and to control the vehicle.

### 2. Description of the prior art

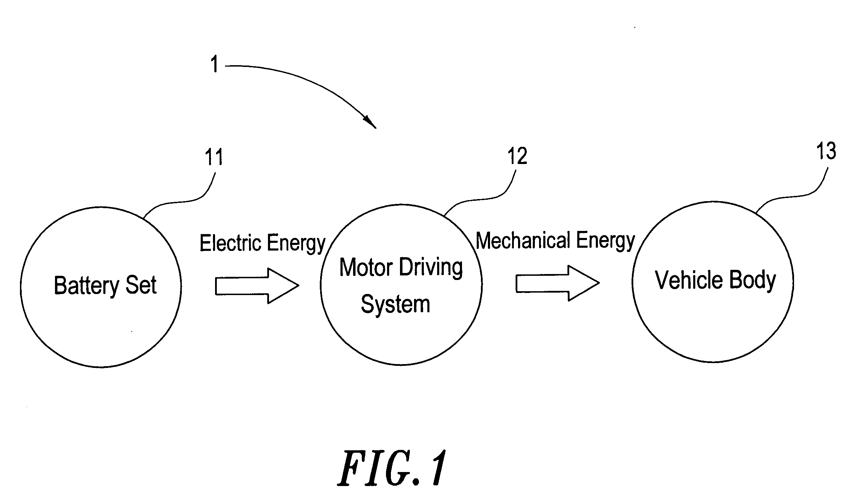

The traditional electronic vehicles include electronic bicycle, electronic motorcycle, electronic skateboard, electronic wheelchair, electronic car and any other electric driving vehicle. Normally, the driving system of the electronic vehicle adapts a battery set for providing sufficient power and a motor driving system to form a power system, and further adapts a mechanical body to form an electronic vehicle. Please refer to FIG. 1, which illustrates a power system of a traditional electronic vehicle. The traditional power system 1 produces electric power by a battery set 11, and the power is provided to a motor driving system 12. The motor driving system 12 further transfers the electric power into a mechanical energy for providing to a vehicle body 13. But the battery set is only providing power and limited by its power volume. Thus, when the motor driving system drains large power current or battery power consumed, the battery set usage life would be influenced. In order to overcome the above problem, it is very often to use a protection circuit configured in the battery set to prevent any improper use and further to monitor the balance volume of the battery set. However, the method of configured the protection circuit in a battery set will increase the difficulty of making battery set; besides, the variation of the battery set will be limited by its configuration and not easy to match the configuration of the vehicle body. Furthermore, it is not able to depart the protection circuit away from the battery set, thus, it is difficult to repair whenever there is any problem, and the cost for repair is relatively increasing.

Except the problem of the battery set, the quality of the power supplying by said battery set may be influenced, because the motor driving system may not get the information of battery set's status, when the current is drained too large, the battery set may be damaged or its protection circuit may be cut, the quality of power supplying would become worse, the rider or driver may be not satisfied with its performance.

Thus, the prior art still remains room for improving. And the present invention provides an energy management system for electronic vehicle to improve the problems.

The inventor of the present invention spends a lot of time and effort for improving the prior art decoration and provides this invention.

### SUMMARY OF THE INVENTION

The object of the present invention is to provide an energy management system for electronic vehicle using a central control system with a standard transmission interface to communicate and exchange information with every module unit, a battery set, a motor driving system, a battery charger and a display device. Thus every module unit may have highest performance, and the performance and reliability of the vehicle may be increased dramatically. And because of the standardized interface, it may have more and more compatible module unit to be configured in the vehicle, and it may be easy to have variety function vehicle.

Another object of this invention is to provide an energy management system for electronic vehicle; which controls the vehicle by a central control system. It collects and monitors the usage status of the battery set. It determines the output power of the motor driving system in accordance with the rider's or the driver's demand to drive the motor driving system and achieve the power demand. Besides, the central control system may control the whole electronic vehicle information, so the operation status of the vehicle, such as battery balance volume, run-mileage, balance mileage, and/or maintenance information, may display on said display device for the rider or driver to control the vehicle.

The other object of this invention is to provide an energy management system for electronic vehicle having information exchanged, which may inform the battery charger about the usage status of the battery set from said central control system to determine the best charging mode or determine the activation for said battery set, and extend the usage life thereof.

In order to achieve the above objectives, the present invention provides an energy management system comprising a central control system having a standard transmission interface for communicating and exchanging information with a battery set, a motor driving system, a battery charger and a display device to access information from said battery set, said motor driving system and a motor for driving said battery charger and said display device; wherein said battery set may be configured in said electronic vehicles and having a standard transmission interface to connect with said central control system. Said motor driving system having a standard transmission interface to connect with said central control system for generating mechanical energy to drive a variety of motors and further to drive said electronic vehicle. Said battery charger may get information of said battery set by exchanging information from said central control system to determine a best charging mode or to determine activation necessary for said battery set to extend usage life of said battery set. Said display device may be configured in a dashboard and show a variety of energy information for said electronic vehicle, such as battery balance volume, run-mileage, balance mileage, and/or maintenance information.

The central control system may be adapted to control the whole electronic vehicle information for collecting and monitoring the using status of said battery set. According to the rider's or driver's demand, it may determine the output power and drive the motor for providing sufficient power. Besides, the central control system may be adapted to control the whole electronic vehicle information, so the operation status of the vehicle may display on said display device for the rider or driver to control the vehicle.

### BRIEF DESCRIPTION OF THE DRAWINGS

The drawings disclose an illustrative embodiment of the present invention which serves to exemplify the various advantages and objects hereof, and are as follows:
FIG. 1 illustrates a traditional electronic vehicle with energy management system; and
FIG. 2 is the present invention of the energy management system for electronic vehicle.

### DETAILED DESCRIPTION OF THE PREFERRED EMBODIMENT

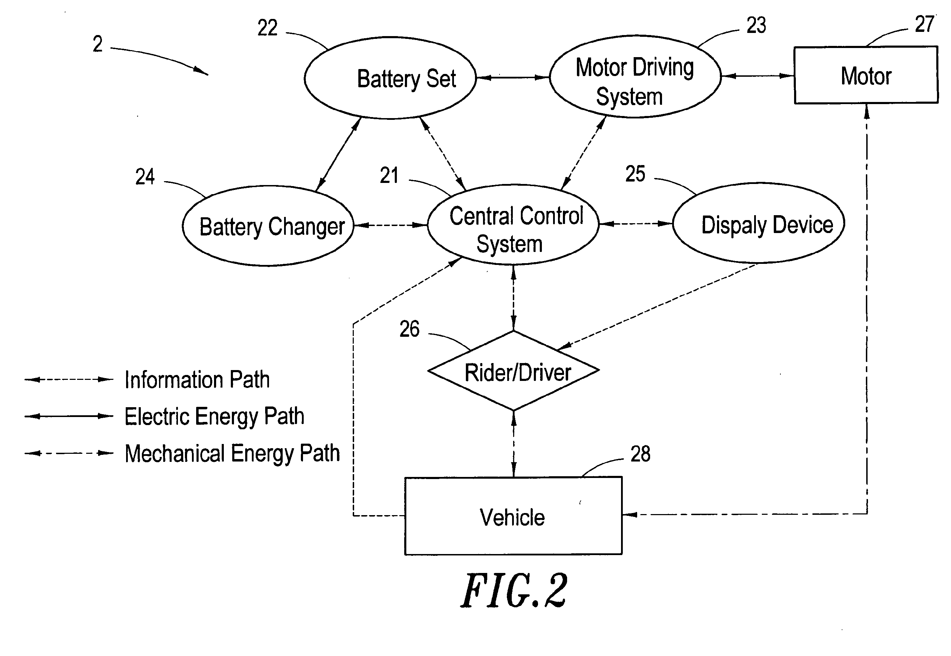

Please refer to FIG. 2, the present invention provides an energy management system 2 for electronic vehicle comprising a central control system 21 having a standard transmission interface for communicating and exchanging information with a battery set 22, a motor driving system 23, a battery charger 24 and a display device 25 to access information. And the standard transmission interface is adapted to communicate for said central control system 21 getting information about balance volume, maximum charging/discharging current, normal rated voltage, and temperature for said battery set 22, and further getting information about normal rated power for said motor driving system 23 and motor 27 regarding to maximum drain current, maximum energy for recycle generating power current, revolution velocity and working temperature.

Said battery set 22, such as a Plumbum Acid battery set, a Nickel-Hydrogen battery set, a Lithium-Ion battery set, a Lithium-Macromolecule battery set, or a Fuel battery set etc., may be configured in said electronic vehicles. It may have a standard transmission interface to connect with said central control system 21.

Said motor driving system 23 having a standard transmission interface to connect with said central control system 21 for generating mechanical energy to drive a variety of motors 27, such as a DC brush motor, a DC non-brush motor, a sensor motor, a synchronous motor, or a reluctance switchable motor, and further to drive said electronic vehicle 28.

Said battery charger 24 may get information of said battery set 22 by exchanging information from said central control system 21 to determine a best charging mode or to determine activation necessary for said battery set 22 to extend usage life of said battery set 22.

Said display device 25 may be configured in a dashboard and show a variety of energy information such as balance volume of said battery set, a run-mileage, a balance mileage, and/or a maintenance information etc.

Said central control system 21 may control energy in accordance with the information of said battery set 22 and said motor 27, or according to the demand of rider/driver 26, to recycle the energy thereof for saving power by transforming the mechanical energy and charging said battery set when the speed is decreasing or going downhill, and further to extend usage life of said battery set 22. Thus, it may effectively extend the mileage of the vehicle.

Furthermore, the energy management system provided by this invention may communicate with every module unit through said standard transmission interface. And every module unit having said standard transmission interface may be replaced and upgraded for increasing flexibility. Users may use the energy management system 2 to have highest performance not only adapting by upgrading every single module unit, but also can adapt by one or two module unit upgrading to have whole excellent performance for the vehicle.

When comparing with the prior art, the present invention can provide the advantage of:
1. making it much easier to have compatible module unit, which comprises a central control system with a standard transmission interface to communicate and exchange information with every module unit, a battery set, a motor driving system, a battery charger and a display device. Thus every module unit may have highest performance, and the performance and reliability of the vehicle may be increased dramatically. And because of the standardized interface, it may have more and more compatible module unit to be configured in the vehicle, and it may be easy to have variety function vehicle.
2. collecting and monitoring the usage status of the battery set. It determines the output power of the motor driving system in accordance with the rider's or the driver's demand to drive the motor driving system and achieve the power demand. Besides, the central control system may control the whole electronic vehicle information, so the operation status of the vehicle, such as battery balance volume, run-mileage, balance mileage, and/or maintenance information, may display on said display device for the rider or driver to control the vehicle.
3. having information exchanged, which may inform the battery charger about the usage status of the battery set from said central control system to determine the best charging mode or determine the activation for said battery set, and extend the usage life thereof.
4. controlling and saving energy in accordance with the information of said battery set 22 and said motor 27, or according to the demand of rider/driver 26, to recycle the energy thereof for saving power by transforming the mechanical energy and charging said battery set when the speed is decreasing or going downhill, and further to extend usage life of said battery set 22. Thus, it may effectively extend the mileage of the vehicle.

The present invention may be embodied in other specific forms without departing from the spirit of the essential attributes thereof; therefore, the illustrated embodiment should be considered in all respects as illustrative and not restrictive, reference being made to the appended claims rather than to the foregoing description to indicate the scope of the invention.

## Claims

1. An energy management system for electronic vehicles comprising:
a central control system 21 having a standard transmission interface for communicating and exchanging information with a battery set, a motor driving system 23, a battery charger 24 and a display device 25 to access information;
wherein said battery set 22 may be configured in said electronic vehicles and having a standard transmission interface to connect with said central control system 21;
wherein said motor driving system 23 having a standard transmission interface to connect with said central control system 21 for generating mechanical energy to drive a variety of motors 27 and further to drive said electronic vehicle;
wherein said battery charger 24 may get information of said battery set by exchanging information from said central control system 21 to determine a best charging mode or to determine activation necessary for said battery set 22 to extend usage life of said battery set; and
wherein said display device may 25 be configured in a dashboard and show a variety of energy information for said electronic vehicle.

2. The energy management system of claim 1 communicating with every module unit through said standard transmission interface, and every module unit having said standard transmission interface may be replaced and upgraded for increasing flexibility.

3. The energy management system of claim 1, wherein said central control system 21 may control energy in accordance with the information of said battery set 22 and said motor 27 to recycle the energy thereof for saving power by transforming the mechanical energy and charging said battery set when the speed is decreasing, and further to extend usage life of said battery set.

4. The energy management system of claim 1, wherein the information accessed from said battery set 22 for said central control system 21 further comprises the information of battery volume, maximum charging/discharging current, normal rated voltage, balance volume and temperature.

5. The energy management system of claim 1, wherein the information accessed from said motor driving system 23 and said motor 27 for said central control system 21 further comprises the information of normal rated power, maximum drain current, maximum energy for recycle generating power current, revolution velocity and working temperature.

6. The energy management system of claim 1, wherein said battery set 22 may be a Plumbum Acid battery set, a Nickel-Hydrogen battery set, a Lithium-Ion battery set, a Lithium-Macromolecule battery set, or a Fuel battery set.

7. The energy management system of claim 1, wherein said motor 27 may be a DC brush motor, a DC non-brush motor, a sensor motor, a synchronous motor, or a reluctance switchable motor.

8. The energy management system of claim 1, wherein the information displayed on said display device 25 comprises a balance volume of said battery set, a run-mileage, a balance mileage, and/or a maintenance information.
